# EUROPEAN PATENT APPLICATION

(11) **EP 3 106 343 A1**
(43) Date of publication of application: **21.12.2016**
(21) Application number: 15465526.0
(22) Date of filing: 19.06.2015
(51) Int. Cl.: B60K 35/00, B60K 37/06, B60N 2/46, G06F 3/01

(54) **GESTURE BASED USER INPUT DEVICE FOR CAR ELECTRONICS**

(71) Applicant: Continental Automotive GmbH, 30165 Hannover (DE)
(72) Inventor: Hera, Andrei-Emanuel, 315700 Sebis (RO)

(57) **Abstract**

The invention relates to a user input device for a vehicle (10) for controlling a parameter of a component (20) of the vehicle. The input device comprises a sensor unit (12) and an armrest (14) with a feedback unit (16). The sensor unit monitors and interprets a gesture performed by a body part (52) of a passenger of the vehicle, and the feedback unit is configured to provide the passenger of the vehicle with a feedback relating to the movement.

## Description

The invention relates to a user input device for a vehicle for controlling a parameter of a component of the vehicle, a vehicle with such a user input device and a method for controlling a parameter of a component of the vehicle.

In modern automobiles, the user is provided with a plurality of features, as for example functions of an entertainment system or of a navigation system, or with systems providing information about the technical condition of the vehicle.

Push buttons, microphones (for voice commands) or touch screens may be provided for user input.

It may be desirable to provide alternatives to buttons, microphones (for voice commands) and touch screens for controlling some functions of a vehicle.

The object of the present invention is solved by the subject-matter of the independent claims, wherein further embodiments are incorporated in the dependent claims.

A first aspect of the invention relates to a user input device for a vehicle for controlling a parameter of a component of the vehicle, comprising a sensor unit (it may be optical, capacitive, a combination of both, or of any type allowing precise movement monitoring), and an armrest with a feedback unit. The sensor unit is configured to capture, i.e. detect, a movement of a body part of a passenger of the vehicle. The feedback unit is configured to provide the passenger of the vehicle with a feedback relating to the movement.

The passenger can be the driver of the car, or also the co-driver, or a passenger in a rear seat.

The term "vehicle" may refer to cars, buses, trucks, construction machines, military vehicles, tractors, but also to trains, aircraft or ships.

The component of the vehicle may be a heating system or an air conditioning system, the radio, or a navigation system. The term "component" may in particular refer to non-safety-critical hardware and features of the vehicle, for instance the entertainment system or the navigation system, but also the air conditioning.

The parameter may describe an attribute or a state of the component. The parameter may refer to the user-defined temperature, i.e. the reference value ("temperature-command") to be targeted by the air conditioning. It can also be the channel of the radio, the track of a CD played by a CD-player. It can also refer to the intensity or the direction of a flow generated by the ventilation system. Furthermore, the parameter can be a destination set up in the navigation system. Also adjustments to the attitude of the car seat may be accomplished by setting the respective parameter regarding the seat.

In case the sensor unit is an optical sensor unit, it may be one camera or may comprise more than one camera. Furthermore, the optical sensor may be a passive sensor unit or an active sensor unit. An active sensor unit may emit radiation in order to receive a reflection of the radiated waves. A passive sensor unit may make use of existing radiation, e.g. daylight. The optical sensor unit may emit and detect infrared radiation.

The feedback unit provides some form of feedback to the passenger of the vehicle. This means that the user is notified about a captured movement of his body part. This can be any movement in a detectable space, so that the movement is captured and a corresponding signal is provided to the passenger. Thus the passenger is notified that the input device is aware of the movement. However, the feedback may also be provided only in cases, in which the movement is successfully interpreted by the input device to have a certain meaning, i.e. for controlling a parameter of a component. It may also be possible that exceeding a threshold of a particular movement of the body part in question to perform the desired action is displayed. Herein, "threshold" may refer to the minimum required movement to trigger the action. After having triggered the action, the feedback signal can indicate the exceeding of the threshold.

The feedback unit is embedded in or attached to an armrest of the vehicle. The driver's right hand (in countries with right-hand traffic) may rest on the armrest to the right of the driver such that his right hand is close to the gear shift and the selection lever, respectively. The feedback unit may be located under the elbow of the driver or in the proximity to it.

In other words, the sensor unit captures a motion of the body part of a passenger, e.g. the driver. Then, the so obtained data are processed, whereupon this passenger is notified by the input device about the captured movements. The movements can be interpreted by the device as inputs, in particular as commands, for a component of the vehicle. According to the interpreted movements of the passenger, a parameter of the component, e.g. the targeted temperature of the heating, the channel of the radio, or a setting in the navigation system is adjusted.

It may be an advantage of the invention that a plurality of buttons or touch screens can be avoided. The driver may have his arm in its usual position, e.g. the right hand close to the gear shift or the selection lever, while performing non-contact actions to control a component of the vehicle.

According to an exemplary embodiment of the present invention, the feedback comprises a vibrational feedback.

This may be particularly suitable for setups, in which a passenger's body part (not necessarily the body part whose motion is being tracked by the sensor unit) touches a part of the vehicle which is affected by the vibrational feedback. If, as explained above, the driver's arm lies on an armrest, and the driver conducts the movements of interest with his hand of this particular arm, the driver will immediately be notified by feedback about the captured movements of his hand by means of vibration signals in the armrest. Thus, due to this vibrational feedback, the driver or passenger will realize which of the movements was captured by the input device, and eventually, how it has been interpreted by the input device.

In another exemplary embodiment of the present invention, the movement of the body part is a predefined gesture.

To distinguish between random movements, which do not reflect any intention to adjust a parameter of a component of the vehicle, and a true command to the input device, the movements may be predefined. This means that the user has to carry out a certain motion, although within some bounds, for a command to be correctly interpreted as the adequate command. This may help the device to discern from random movements of the user.

In another exemplary embodiment of the present invention, the body part of the passenger is the hand of the passenger.

The hand, including the wrist, may perform complex and precise movements. A plurality of joints allow for small but precise movements. If the configuration with the armrest as described above is applied, i.e. the arm of the passenger is resting on this armrest, the sensor unit may be arranged on the bottom or on the top of the vehicle interior, on an axis essentially perpendicular to the arm rest, and the hand may lie in a plane close or exactly perpendicular to the direction the sensor unit is directed to. This may allow for the driver or the passenger to conduct the movements to be tracked without lifting his arm.

In another exemplary embodiment of the present invention, the user input device is configured to provide a visual feedback and/or an audio signal feedback relating to the movement.

If a screen is present, additional feedback can be provided by this screen. The screen may reproduce the motion of the hand for instance, or display the adjusted parameter, for example the new temperature set.

In another exemplary embodiment of the present invention, the feedback corresponds to a mechanical feedback of a press button and/or rotary button.

A mechanical button may have some resistance against being pressed or rotated. Some buttons have a varying force to be overcome when e.g. rotated or pressed. This may be the case when turning a rotating button, which controls quantized parameters, e.g. the desired temperatures in steps of 0,5K. The feedback signal may resemble such a resistance, and, for the example above, provide a short feedback signal for every temperature step gained or reduced.

In another exemplary embodiment of the present invention, the feedback indicates a threshold of the parameter.

If, for example, the desired temperature of the air conditioning system is continuously lowered towards lower heating values, at some point the air conditioning system may switch to a cooling mode. Thus, the change from heating to cooling may be defined by a threshold temperature, which may be the air temperature inside the vehicle. Another example for a threshold is the final track of a CD or another playlist.

In another exemplary embodiment of the present invention, the feedback has a discrete form.

In this case, the feedback provides impulse-like signals. The feedback may comprise a single pulse or step signal, or several pulses. Between the pulses, the feedback signal may be silent.

In another exemplary embodiment of the present invention, the feedback indicates a saturation of the parameter.

If a parameter reaches its saturation or an artificial bound, e.g. determined by an on-board processor, the feedback unit may indicate this bound with an appropriate signal. For instance, the air conditioning system has an upper bound of volumetric flow of cold air. This is why there may be a lower bound in temperature or intensity of cooling for the air conditioning to be set.

In another exemplary embodiment of the present invention, the feedback is continuously provided for a continuous parameter.

For example, the zoom level of the map displayed by the navigation system may be considered as being continuously adjustable. Although the functioning of any electronic device implies discrete and quantized behavior, the zoom level may be configured to be continuously adjustable on the user interface. If such a continuously adjustable parameter is changed, the feedback may provide also a continuous feedback signal, for instance a continuous vibrating feedback.

Another aspect of the present invention relates to a vehicle with a user input device for controlling a parameter of a component of the vehicle, comprising the user input device described above and below.

Another aspect of the present invention relates to a method for controlling a parameter of a component of the vehicle, comprising the steps of capturing a movement of a body part of a passenger of the vehicle by a sensor unit and providing feedback to the passenger relating to the movement by the feedback unit in the armrest.

These and other aspects of the invention will become apparent from and elucidated with reference to the embodiments hereinafter.

Exemplary embodiments of the invention will be described in the following with reference to the following drawings:
Fig. 1 shows an assembly with a user input device of a car according to an exemplary embodiment of the present invention.
Fig. 2 shows time histories of vibration signals according to another exemplary embodiment of the present invention.
Fig. 3 shows a method for controlling a parameter of a component according to another exemplary embodiment of the present invention.
Fig. 4 shows a vehicle with elements of a user input device according to another exemplary embodiment of the present invention.

The illustration in the drawings is schematically. In different drawings, similar or identical elements are provided with the same reference numerals.

The following detailed description is merely exemplary in nature and is not intended to limit application and uses. Furthermore, there is no intention to be bound by any theory presented in the preceding background or summary or the following detailed description.

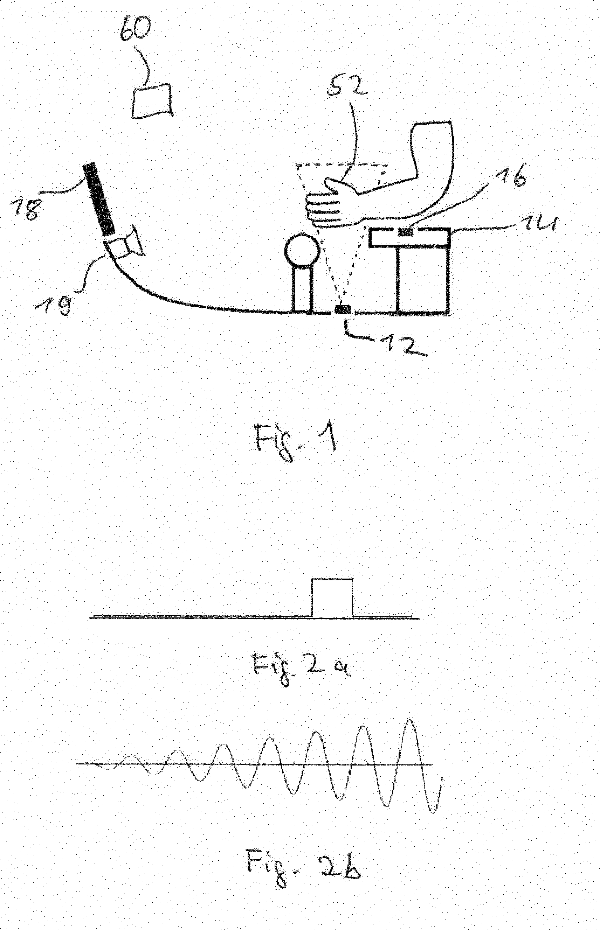

Fig. 1 shows a user input device for a vehicle 10. Inputs and commands to the user input device are produced by a hand 52. The hand 52 rests on an armrest 14. The armrest 14 is equipped with a vibration generating unit 16. Movements of the hand 52 of a passenger are captured by a camera 12, which is located below the hand 52 in this shown position. The camera 12 has a diode emitting light with wavelength in the infrared range. The infrared light is reflected by the hand 52 and captured by the camera 12. In this way, the camera provides information about the position and possibly the movement of the hand 52. The input device can be activated by e.g. a button or by a specific gesture of the hand 52 or another body part. The movement itself, i.e. the velocity of the hand 52 can be tracked in a radial direction by analyzing the varying wavelength due to the Doppler effect or by analyzing the optical flow rate. The velocity of the hand 52 in a tangential direction may also be tracked by the optical flow rate. As the camera 12 captures a set of pictures, e.g. twenty five frames per second, the velocity of the hand 52 can also be obtained by processing the multitude of images. A computational unit 60 organizes the data flow and its processing, and is configured to interpret the captured movements. Another purpose of the computational unit 60 is to assign commands for adjusting a parameter of a component 20 of the vehicle 10. Thus, it is necessary to interpret and attribute captured movements to predefined commands. If for example the hand 52 is moving as if it was turning a rotary button, the camera 12 captures this movement, sends the signals to the computational unit 60, which interprets this movement as "turning a button", and the previously chosen parameter is changed according to the speed of movement and the angle, the hand 52 is rotated with. The user is notified about the captured and successfully interpreted gesture by a vibration signal from the feedback unit 16. In addition, the speaker 19 and the display 18 provide some information that the movement of the hand 52 is captured, and after the capturing, that it was successfully interpreted. Thus, the parameter to be changed of the component 20 is indicated on the display 18, while feedback is given via the armrest 14 to the user during the movement of the hand 52.

Fig. 2 shows various time histories of a vibration signal, generated by the feedback unit 16.

Fig. 2a represents a discrete vibration event. If a saturation of a parameter is reached, the feedback unit 16 sends a temporally limited impulse of vibrations. The impulse may have a duration of one second or half a second for instance.

Fig. 2b shows a time history of an alternative vibration signal, wherein the vibration signal has a varying frequency amplitude over time. It may also have a frequency which varies over time. The signal may be used to provide feedback to the passenger when he moves his hand in order to increase the temperature command value or the volume of the speaker for example. As can be seen from the plot, the frequency as well as the amplitude of the signal is increased over time. The ranges of the signal further to the right correlate to an increased temperature or a higher volume of the sound system, for example.

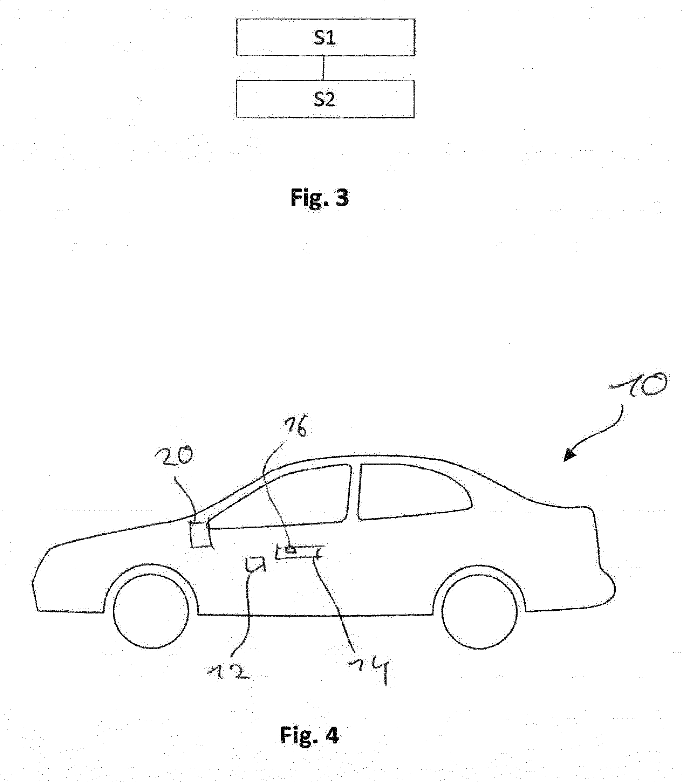

Fig. 3 shows a method for controlling a parameter of a component of the vehicle. A first step S1 is capturing a movement of a body part of a passenger of the vehicle by a sensor unit. The second step S2 is providing feedback to the passenger relating to the movement by the feedback unit in the armrest.

Fig. 4 shows a vehicle 10 with a component 20, here a radio, and a feedback unit 16, which is integrated in an armrest 14. The optical sensor unit 12 is configured to capture movements of the hand of a passenger's arm resting on the arm rest 14.

### Reference signs

- 10: Vehicle
- 12: Sensor unit
- 14: Armrest
- 16: Feedback unit
- 18: Display
- 19: Speaker
- 20: Component
- 52: Body part
- 60: Computational unit

## Claims

1. User input device for a vehicle (10) for controlling a parameter of a component (20) of the vehicle (10), comprising:
a sensor unit (12), and
an armrest (14) with a feedback unit (16),
wherein the sensor unit (12) is configured to capture a movement of a body part (52) of a passenger of the vehicle (10) ;
wherein the feedback unit (16) is configured to provide the passenger of the vehicle (10) with a feedback relating to the movement.

2. User input device according to claim 1,
wherein the feedback comprises a vibrational feedback.

3. User input device according to one of the preceding claims,
wherein the movement of the body part (52) is a predefined gesture.

4. User input device according to one of the preceding claims,
wherein the body part (52) of the passenger is the hand of the passenger.

5. User input device according to one of the preceding claims, configured to provide a visual feedback and/or an audio signal feedback relating to the movement.

6. User input device according to one of the preceding claims,
wherein the feedback corresponds to a mechanical feedback of a press button and/or rotary button.

7. User input device according to one of the preceding claims,
wherein the feedback indicates a threshold of the parameter.

8. User input device according to one of the preceding claims,
wherein the feedback has a discrete form.

9. User input device according to one of the preceding claims,
wherein the feedback indicates a saturation of the parameter.

10. User input device according to one of the claims 1 to 7,
wherein the feedback is continuously provided for a continuous parameter.

11. Vehicle with a user input device for controlling a parameter of a component (20) of the vehicle (10), comprising:
a sensor unit (12), and
an armrest (14) with a feedback unit (16),
wherein the sensor unit (12) is configured to capture a movement of a body part (52) of a passenger of the vehicle (10) ;
wherein the feedback unit (16) is configured to provide the passenger of the vehicle (10) with a feedback relating to the movement.

12. Method for controlling a parameter of a component (20) of the vehicle (10), comprising the steps of:
- Capturing (S1) a movement of a body part (52) of a passenger of the vehicle (10) by a sensor unit (12), and
- Providing (S2) feedback to the passenger relating to the movement by the feedback unit (12) in an armrest (14) of the vehicle.
